Europäisches Patentamt

(19) **European Patent Office**

**Office européen des brevets**

(11) Numéro de publication: **0 133 114 B1**

(12) **FASCICULE DE BREVET EUROPEEN**

(45) Date de publication du fascicule du brevet:
**19.11.87**

(21) Numéro de dépôt: **84401519.8**

(22) Date de dépôt: **19.07.84**

(51) Int. Cl.⁴: **C 03 B 23/033**, C 03 B 27/04

(54) Installation de bombage et de trempe de feuilles de verre.

(30) Priorité: **20.07.83 FR 8311955**

(43) Date de publication de la demande:
**13.02.85 Bulletin 85/7**

(45) Mention de la délivrance du brevet:
**19.11.87 Bulletin 87/47**

(84) Etats contractants désignés:
**AT BE CH DE FR GB IT LI LU NL SE**

(56) Documents cités:
**FR - A - 2 442 219**
**US - A - 2 247 118**
**US - A - 2 308 062**

(73) Titulaire: **SAINT-GOBAIN VITRAGE, Les Miroirs 18, avenue d'Alsace, F-92400 Courbevoie (FR)**

(72) Inventeur: **Bocelli, Aureliano, Via Curtane e Montana 5, I-57100 Livorno (IT)**
Inventeur: **Colombini, Carlo, Via Tosco Romagnola 1455, I-56023 San Prospero (IT)**

(74) Mandataire: **Leconte, Jean-Gérard et al, Saint-Gobain Recherche 39, Quai Lucien Lefranc, F-93304 Aubervilliers Cedex (FR)**

ACTORUM AG

## Description

La présente invention se rapporte au bombage et à la trempe de feuilles de verre défilant à plat sur un lit de rouleaux droits ou cintrés disposés le long d'un profil courbe à concavité tournée vers le haut.

Il est connu par la publication de brevet français 2442219 de bomber puis de tremper des feuilles de verre en les faisant défiler à plat sur un lit de rouleaux ou de tiges cintrées, disposés le long d'un profil courbe. Les feuilles de verre arrivant chauffées à température de ramolissement sur un lit de conformation fixe à concavité tournée soit vers le bas soit vers le haut et épousent la courbure du lit de conformation au fur et à mesure qu'elles progressent.

Pour permettre un défilement régulier des feuilles de verre, sans passages anguleux susceptibles de nuire à la bonne qualité du verre, en particulier à l'entrée de l'installation de bombage, quand le verre est à température élevée, on dispose l'installation de bombage dans le prolongement des moyens amont d'amenée des feuilles de verre, fournissant ainsi aux feuilles de verre un support à variation de pente progressive.

Il en résulte, en particulier pour les installations à concavité tournée vers le haut, que l'extrémité finale du lit de conformation est très redressée, que les feuilles de verre ont tendance à glisser et qu'il est alors difficile de les récupérer sans leur faire subir de manipulations relativement brutales qui risquent de nuire à leur bonne qualité et même de les endommager.

En outre, les moyens de récupération sont alors disposés à un niveau bien différent de celui de l'arrivée des feuilles de verre dans l'installation de bombage et cela procure des difficultés d'implantation.

Cependant, de telles installations de bombage ayant leur concavité tournée vers le haut présentent l'avantage essentiel de pouvoir traiter des feuilles de verre portant sur leur face supérieure non en contact avec les rouleaux de support, des revêtements même fragiles, par exemple des couches ou bandes d'émail qui à ce stade ne sont pas encore totalement solidifiées, du fait de leur récente vitrification qui vient d'avoir lieu au cours du réchauffage en vue du bombage et de la trempe. De telles bandes d'émail sont par exemple déposées à la périphérie de pare-brise, de lunettes arrières, de vitres latérales de véhicules automobiles pour masquer la colle de fixation desdits pare-brise, lunettes et vitres et procurer un aspect net et régulier.

La présente invention vise à améliorer les installations de bombage et de trempe à plat à concavité tournée vers le haut, de façon à faciliter la récupération des vitrages qu'elles ont traités et à éviter leur glissement tout en préservant leur surface supérieure et en particulier les revêtements que celle-ci peut porter.

Ces installations ainsi améliorées sont plus facilement implantables du fait de la meilleure possibilité de récupérer les vitrages, permettant la disposition des moyens d'évacuation desdits vitrages bombés et trempés, sensiblement au même niveau que les moyens d'amenée en amont du bombage et de la trempe et suivant une direction également horizontale ou sensiblement horizontale.

Pour cela, l'invention propose une installation de bombage ou de bombage et de trempe à plat de feuilles de verre comprenant une série d'organes pour supporter les feuilles de verre tels que des rouleaux ou des tiges cintrées disposés le long d'un profil courbe à concavité dirigée vers le haut, dans laquelle le dernier organe de support est associé à un moyen de maintien supérieur basculant et dans laquelle également ledit dernier organe de support constitue le premier élément d'un transporteur pour les feuilles de verre, à pente différente de celle du profil courbe de bombage ou de bombage et de trempe qui le précède.

Le moyen de maintien supérieur est monté sur un cadre basculant autour d'un axe confondu avec l'axe de rotation du dernier organe de support du verre, ledit cadre étant équipé d'un contrepoids ayant tendance à le ramener dans une position telle que le moyen de maintien supérieur soit face au dernier organe support disposé sur le profil courbe.

La valeur du contrepoids est déterminée en fonction des vitrages travaillés et elle est telle que le basculement a lieu sous l'effet du poids des vitrages engagés entre le moyen de maintien et le dernier organe support et maintenus seulement par leur extrémité arrière.

Avantageusement, un jet gazeux dirigé sur la surface supérieure concave des vitrages est prévu pour aider au basculement.

L'invention sera maintenant décrite plus en détail en référence aux figures jointes qui représentent:

Fig. 1 une vue de profil de l'ensemble de l'installation;

fig. 2 une vue de profil plus détaillée du système de basculement.

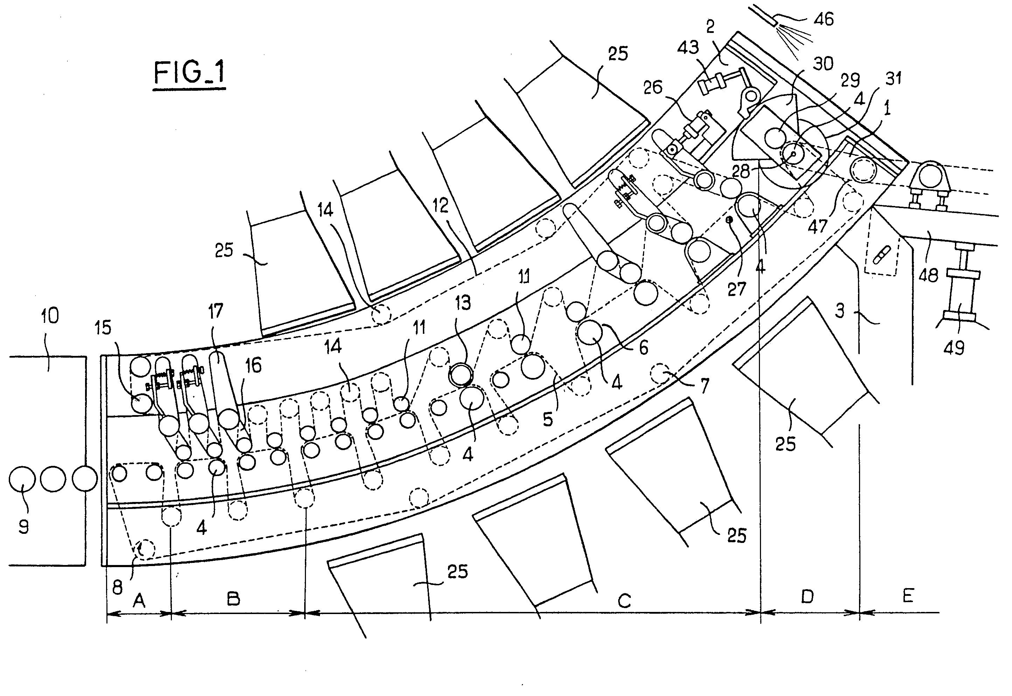

La fig. 1 montre l'ensemble d'une installation de bombage et de trempe de feuilles de verre dans laquelle les différents organes de support desdites feuilles de verre sont disposés le long d'un profil courbe régulier à concavité tournée vers le haut.

Elle possède deux éléments de châssis 1 et 2, un élément inférieur 1 et un élément supérieur 2, courbés de la même valeur dans le sens de leur longueur, portés par un bâti 3. L'élément inférieur 1 est équipé d'organes 4 de support du verre tels des rouleaux droits disposés parallèlement les uns aux autres dans le sens de la largeur dudit élément 1, mis en rotation sur eux-mêmes par exemple par l'intermédiaire d'une chaîne 5 agissant sur les pignons 6 disposés en extrémité de rouleaux, maintenue tendue à l'aide de pignons tendeurs et de rappel 7, entraînée à partir d'un arbre moteur 8. Les rouleaux disposés les uns à la suite des autres déterminent un lit de conformation pour les feuilles de verre, à profil courbe, disposé à la suite d'un transporteur 9 d'amenée des feuilles de verre, traversant un four 10 de réchauffage du verre.

L'élément de châssis supérieur 2 est équipé de moyens de maintien 11 des feuilles de verre destinés à prendre appui sur la face supérieure desdites feuilles de verre, à savoir lorsque les organes de support 4 sont des rouleaux droits, des contre-rouleaux, droits également, éventuellement munis de bagues destinées à porter sur le verre.

Chaque moyen de maintien 11 est associé à un organe de support 4 et est disposé face audit organe de support, c'est-à-dire que les axes de rotation du moyen de maintien et de l'organe de support appartiennent approximativement au même plan déterminé par l'axe de la portion de cylindre que constitue l'un des deux châssis inférieur 1 ou supérieur 2 et par l'axe de rotation de l'organe de support 4.

Avantageusement, pour favoriser le défilement des feuilles de verre entre les organes de support 4 et les moyens de maintien 11, malgré l'inclinaison parfois importante, lesdits moyens de maintien 11 sont eux-aussi mis en rotation à la même vitesse que les organes de support 4, de la même façon qu'eux, c'est-à-dire par l'intermédiaire d'une chaîne 12 agissant sur des pignons 13 disposés en extrémité des moyens de maintien, maintenue tendue à l'aide de pignons tendeurs et de rappel supérieurs 14, entraînée à partir d'un arbre moteur supérieur 15.

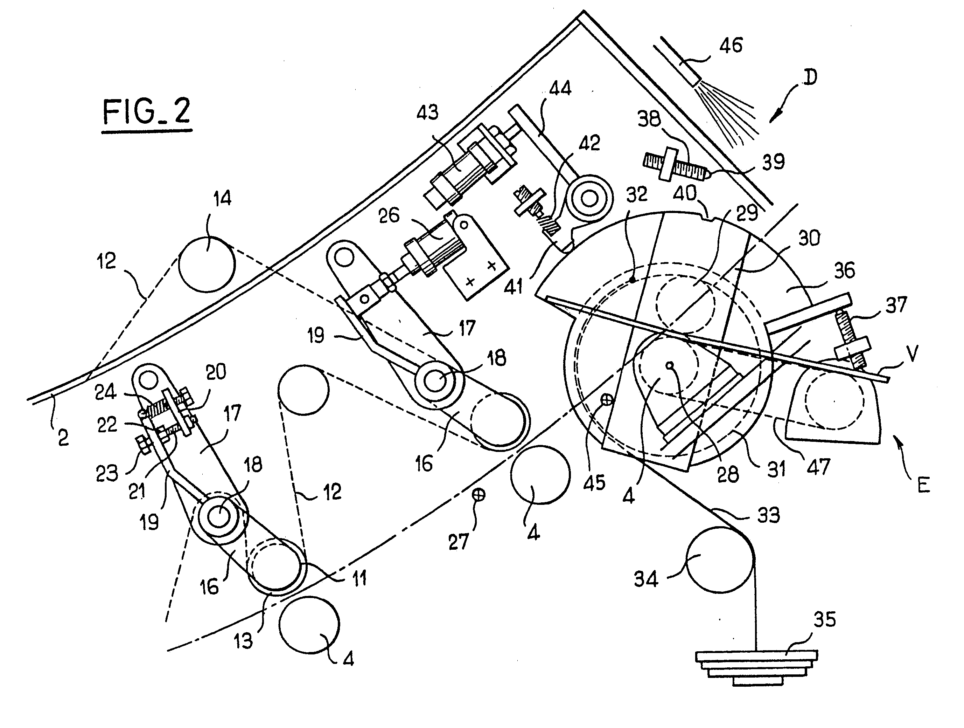

Les moyens de maintien supérieurs 11 et les organes de support inférieurs 4 sont espacés pour permettre le passage de feuilles de verre. Avantageusement, pour permettre l'utilisation de l'installation pour diverses épaisseurs de verre, cet espace entre organes inférieurs de support 4 et moyens de maintien supérieurs 11 est règlable. Cela est obtenu par le fait que chaque moyen de maintien supérieur 11 est porté par un double jeu de deux biellettes 16 et 17 montrées plus en détail fig. 2, un jeu à chaque extrémité d'un moyen de maintien. Les biellettes 16 portent à leur extrémité libre un moyen de maintien 11 et sont articulées par leur autre extrémité sur un axe 18 appartenant aux biellettes 17 par ailleurs fixées sur le châssis 2. Chaque biellette 16 est solidaire d'un bras 19 dont la position vis-à-vis d'une butée 20 appartenant à la biellette 17 est règlable par un système de vis 21 et d'écrous 22 et 23 serrant entre eux le bras 19.

Avantageusement, pour permettre une certaine élasticité au système, chaque bras 19 est rappelé élastiquement vers la butée 20 à l'aide d'un ressort 24 et un certain débattement est laissé au bras 19 entre les deux écrous 22 et 23. Avantageusement, pour éviter une modification de la tension de la chaîne 12, l'axe 18 d'articulation des deux biellettes 16 et 17 l'une sur l'autre est en même temps l'axe d'un pignon de rappel sur lequel engrène la chaîne 12.

Le début de l'installation, ou zone A, ne comporte pas obligatoirement de moyens de maintien supérieurs 11, mais uniquement des organes de support 4; cette zone A fait immédiatement suite au transporteur 9 sortant du four 10 de réchauffage.

Cependant, pour faciliter non plus le maintien de la feuille de verre en vue d'éviter son glissement, mais pour aider les feuilles de verre et en particulier leur bord avant et/ou leur bord arrière à bien entrer dans le dispositif de bombage et à adopter le plus rapidement possible son profil courbe, il est utile de disposer malgré tout de tels moyens supérieurs de maintien 11, même au tout début de l'installation et en particulier en association avec au moins le premier organe de support inférieur 4 du lit de conformation à profil courbe.

De préférence l'aplomb de ces moyens supérieurs 11 de maintien par rapport aux organes de supports inférieurs 4 auxquels ils sont associés, est modifiable. Cela permet de déplacer soit vers l'amont, soit vers l'aval le moyen de maintien supérieur 11 pour accueillir le bord avant d'une feuille de verre arrivant sur l'installation de bombage, ou pour accompagner son bord arrière et forcer lesdits bords à acquérir immédiatement le bon profil.

Ce déplacement peut être obtenu en remplaçant la vis 21 du système de réglage des moyens supérieurs de maintien 11 précédemment décrits, par exemple par un vérin, vérin entrant en action, après un certain retard réglable, sous la commande d'un détecteur soit du bord avant soit du bord arrière des feuilles de verre.

Ce système de déplacement est particulièrement recommandé pour le moyen de maintien supérieur 11 associé au premier organe inférieur de support 4, mais il peut bien entendu équiper la totalité des moyens de maintien supérieurs 11.

Ensuite, une zone B comporte nécessairement à la fois des moyens de maintien supérieurs 11 et des organes de support 4.

Ensuite, une zone C comporte, en plus des éléments 4 et 11 présents dans la zone B, des buses de soufflage 25 destinées à souffler un gaz de refroidissement et en général de l'air sur le verre, en vue de le tremper. Ces buses 25 sont disposées de façon à souffler le gaz de refroidissement à la fois sur la face inférieure et la face supérieure du verre. Elles possèdent des tubulures ou des fentes qui tant sur le dessus que sur le dessous s'approchent des faces des feuilles de verre. Cependant, pour la clarté des dessins, ces tubulures ou ces fentes ne sont pas montrées, seules sont représentées les gaines principales conduisant aux tubulures ou aux fentes. Le moyen de maintien supérieur 11 associé à l'avant dernier organe de support 4 de l'installation diffère légèrement des moyens précédents, en ce sens que son espacement par rapport à l'organe support 4 n'est plus déterminé par un ensemble de vis, d'écrous et de ressort, mais comme montré en détail fig. 2 par un vérin 26 fixé au bâti 2 et agissant sur le bras 19 solidaire de la biellette 16, sous la commande d'un détecteur 27 de présence de verre placé immédiatement avant ledit avant dernier organe de support.

Le moyen de maintien supérieur associé au dernier organe de support 4 de l'installation est quant à lui totalement différent des moyens de maintien antérieurs 11. Il appartient à un ensemble D monté sur l'axe de rotation 28 du dernier organe de support 4 et apte à basculer par pivotement autour de cet axe 28. Cet ensemble comporte le moyen de maintien supérieur basculant référencé 29 monté dans un cadre 30 solidaire à au moins une de ses extrémités latérales, d'une poulie 31, en un point 32 de laquelle est attaché un cable 33 qui s'enroule sur elle, puis sur une poulie de rappel 34 et auquel est attaché un contrepoids 35.

Ce cadre 30 est muni d'un cadran 36 qui peut venir en fin de course de rotation s'arrêter sur une butée 37 ou dans l'autre sens sur une butée 38. Avantageusement ces butées 37 et 38 sont munies de plots 39 élastiques ou montés sur ressorts pour permettre un arrêt du basculement sans à-coups. Cet ensemble D, par exemple son cadran 36, est muni d'une échancrure 40 dans laquelle peut venir se loger une clavette 41 enfoncée sous l'action d'un ressort 42 et relevable sous la poussée d'un vérin 43 agissant sur un bras coudé 44 portant ladite clavette 41.

Un détecteur 45 de présence d'une feuille de verre, disposé à la sortie de l'avant dernier couple de moyens de maintien référencé 29 et d'organes de support 4 est associé au vérin 43 pour déclencher sa poussée dès qu'une feuille de verre arrive au bout de l'installation. Une buse 46 peut également être prévue pour souffler de l'air contre l'extrémité avant de la face supérieure des feuilles de verre et ainsi déclencher ou accélérer leur basculement.

L'écartement du moyen de maintien et de l'organe de support, dans cet ensemble basculant D peut être réalisé avec les mêmes systèmes que ceux décrits précédemment, c'est-à-dire soit réglables par vis et écrous et éventuellement montés élastiquement, soit à ouverture par vérin. Ces systèmes non représentés étant dans ce cas montés sur le cadre 30, et équilibrés par les contrepoids nécessaires.

Un transporteur E fait suite au lit de conformation à profil courbe, transporteur ayant une pente différente de celle du lit de conformation. Une cassure dans le profil existe donc entre le lit de conformation et de transporteur E.

Le premier organe de support de ce transporteur est constitué par le dernier organe de support 4 de la zone de bombage ou de bombage et de trempe à profil courbe.

Le deuxième organe de support de ce transporteur est porté par le châssis 1 et il est entraîné par une chaîne 47 engrenant également sur le dernier organe de support 4.

Les autres organes de support de ce transporteur sont portés par des poutres 48 montées pivotantes par rapport au bâti 3 sous l'action de vérins 49 permettant de les incliner plus ou moins pour faire retourner les feuilles de verre transportées à un convoyeur d'évacuation fixe et non figuré.

Dans la mesure où une courbure simple des feuilles de verre est recherchée, les organes de support 4 sont des rouleaux droits; les moyens de maintien sont alors également des rouleaux droits portant sur les feuilles de verre par toute leur longueur ou des rouleaux ou des axes droits munis de galets ou de bagues, les galets ou les bagues portant seuls sur le verre.

Dans la mesure où une courbure plus complexe de feuilles de verre est requise, les organes de support 4 sont des tiges cintrées, orientables pour procurer un cintrage plus ou moins accentué dans la direction transversale, par pivotement autour d'un axe qui passe par leurs extrémités. Dans ce cas, les moyens de maintien supérieurs 11 sont des contre-tiges de forme complémentaire.

Chaque tige cintrée est entourée d'une gaine tubulaire déformable qui tourne sur elle-même en s'appuyant sur la tige par l'intermédiaire de bagues de glissement par exemple en graphite.

Les pignons 6 et 13 décrits précédemment comme entraînant les organes de support et les moyens de maintien 11 en rotation sont alors solidaires des gaines tubulaires déformables.

De telles tiges cintrées, contre-tiges, gaines tubulaires, bagues de glissement, sont décrites en détail dans les publications françaises de brevets n° 1476785, 2492361, 2129919, 2189330, 2383890 et 2442219.

Des buses de soufflage 25 articulées pour s'adapter à la courbure des tiges cintrées sont décrites dans la publication française de brevet n° 2144523.

Avantageusement, pour faciliter les interventions sur l'installation, les châssis inférieur 1 et supérieur 2 peuvent être écartés à l'aide de vérins non représentés, par exemple.

L'invention fonctionne de la façon décrite ci-après:

Des feuilles de verre V sont acheminées par le transporteur 9, elles traversent le four 10 de réchauffage et parviennent à l'installation objet de l'invention. Il peut s'agir de simples feuilles de verre, mais il peut également s'agir de feuilles de verre qui portent sur leur face supérieure un dépôt d'émail par exemple une bande périphérique d'émail. Cet émail est cuit dans le four 10, cependant à sa sortie, il est encore fragile et nécessite des précautions de manipulation. En outre, il constitue une légère surépaisseur sur le verre.

Les feuilles de verre pénètrent donc dans l'installation portées par les organes de support 4 constitués par des rouleaux droits ou des tiges cintrées suivant que la courbure désirée est simple ou double.

Dans la mesure où l'installation est dotée de tiges cintrées, celles-ci sont d'abord pratiquement couchées puis, comme expliqué dans la publication 2442219, sont progressivement de plus en plus redressées.

Les tiges cintrées ou les rouleaux sont disposés le long d'un profil curviligne qui prolonge le profil du transporteur 9. En reposant sur ces tiges ou rouleaux, les feuilles de verres s'incurvent.

Les feuilles de verre sont supportées par les organes de support inférieurs 4 et les moyens de maintien supérieurs 11 sont règlés à l'aide des vis 21 et des écrous 22 et 23 de façon à réserver entre eux et les organes de support inférieurs 4 en espace de passage dont l'épaisseur est égale à l'épaisseur de verre augmentée de l'épaisseur éventuelle de la couche d'émail, ou plus généralement du revêtement ou des reliefs si bien que les éventuels revêtements encore fragiles ne risquent pas d'être endommagés. En outre, le montage élastique des moyens de maintien 11, grâce aux ressorts 24, autorise de légères surépaisseurs supplémentaires.

Les feuilles de verre progressent ainsi dans la zone A puis dans la zone B, où elles se cintrent régulièrement en épousant la forme du lit de conformation. Elles pénètrent ensuite dans la zone C de trempe. Elles sont alors toujours maintenues et supportées par les mèmes moyens que dans la zone B, mais elles subissent en plus de refroidissement par les jets de gaz et en général d'air, soufflés par les buses 25 intercalées entre les organes de support 4 et les moyens de maintien 11, en vue de leur trempe. Elles progressent dans l'installation le long d'un trajet qui est de plus en plus redressé.

Elles rencontrent le détecteur 27 qui commande la poussée du vérin 26; il en résulte l'inclinaison du bras 19 et de la biellette 16 et, en conséquence, l'écartement du moyen de maintien 4 concerné, par rapport à l'organe de support 11 associé.

Après un temps déterminé règlable, le vérin 26 fonctionne en sens inverse pour appliquer le moyen de maintien 11 contre le verre et l'empêcher de glisser en arrière dans la pente désormais assez redressée de l'installation.

Elles s'engagent ensuite dans l'ensemble D de basculement entre le dernier organe de support 4 et le moyen de maintien basculant 29 associé.

Sous l'effet du détecteur 45, le vérin 43 agit sur le bras coudé 44 ce qui a pour conséquence de dégager la clavette 41 de l'échancrure 40.

Le bord avant du verre V progresse de plus en plus au-delà de l'ensemble D, sans aucun support. Il se crée un moment de rotation, éventuellement encore renforcé par l'action du jet soufflé par la buse 46, qui entraîne le basculement de l'ensemble D. Le moyen de maintien supérieur 29 bascule donc et vient se placer face à l'organe de support, c'est-à-dire approximativement symétriquement à lui par rapport au plan de la feuille de verre V reposant maintenant sur le transporteur E.

Le mouvement de bascule est amorti par la rencontre des bords du cadran 36 avec le plot élastique 39 de la butée 37.

L'action du vérin 43 est relâchée.

Les feuilles de verre V progressent maintenant sur le transporteur E. Dès que celles-ci sont dégagées de l'ensemble à bascule D, celui-ci retourne à sa position d'origine en basculant en sens inverse sous l'action du contrepoids 35 et la clavette 41 est réenclenchée dans l'échancrure 40 sous l'action du ressort 42.

La pente du transporteur E est règlée par les vérins 49, de façon à rejoindre le convoyeur d'évacuation fixe.

Au cours du basculement, les feuilles de verre ne subissent aucune manipulation brutale susceptible de les endommager. L'installation proposée permet donc de récupérer facilement des feuilles de verre à la sortie d'une installation de bombage et de trempe où elles sont fortement inclinées, pour les remettre au convoyeur sensiblement horizontal.

Un tel ensemble à bascule D peut également être appliqué dans d'autres installations.

**Revendications**

1. Installation de bombage ou de bombage et de trempe de feuilles de verre dans laquelle les feuilles de verre défilent sur une série d'organes de support (4) tels des rouleaux ou des tiges cintrées disposés le long d'un profil courbe à concavité dirigée vers le haut, caractérisée en ce que le dernier organe de support (4) est associé à un moyen de maintien supérieur (29) basculant et en ce que ledit dernier organe de support (4) constitue le premier élément d'un transporteur (E) pour les feuilles de verre, à pente différente de celle du profil courbe de bombage ou de bombage et de trempe qui le précède.

2. Installation selon la revendication 1, caractérisée en ce que le moyen de maintien supérieur basculant 29 est monté dans un cadre (30) basculant autour d'un axe confondu avec l'axe de rotation (28) du dernier organe de support (4) des feuilles de verre, ledit cadre étant équipé d'un contrepoids ayant tendance à le ramener dans une position telle que le moyen de maintien (29) qu'il porte soit face au dernier organe de support (4) disposé sur le profil courbe.

3. Installation selon la revendication 2, caractérisée en ce que la valeur du contrepoids est déterminée pour que sous l'effet du poids des vitrages engagés entre le dernier moyen de maintien (29) et le dernier organe de support (11), maintenus seulement par leur extrémité arrière, le basculement ait lieu.

4. Installation selon l'une des revendications 2 ou 3, caractérisée en ce que le cadre basculant (30) est bloqué dans la position de réception des feuilles de verre à l'extrémité du profil courbe par une clavette (41) engagée dans une échancrure (40) sous l'effet d'un ressort (42).

5. Installation selon la revendication 4, caractérisée en ce qu'un vérin (43) agissant sur un bras coudé (44) portant la clavette (41), sous la commande d'un détecteur de présence d'une feuille de verre disposé à la sortie de l'avant dernier couple de moyens de maintien et d'organes de support est prévu pour désengager ladite clavette (41) à l'arrivée d'une feuille de verre.

6. Installation selon l'une des revendications 1 à 5, caractérisée en ce que des butées élastiques (37, 38) limitant le basculement dans l'un et l'autre sens sont prévues.

7. Installation selon l'une des revendications précédentes, caractérisée en ce que le dernier moyen de maintien supérieur (29) et l'organe de support inférieur (4) associé sont disposés à l'écartement voulu grâce à un système de vis (21) et d'écrous (22, 23) règlant la position d'un bras (19) solidaire d'une biellette (16) qui porte le moyen de maintien supérieur (29), ladite biellette (16) s'articulant alors sur l'extrémité d'une autre biellette (17) fixée au cadre (30).

8. Installation selon la revendication 7, caractérisée en ce qu'un jeu est laissé entre les deux écrous (22 et 23) et en ce qu'un ressort (24) relie l'extrémité du bras (19) à une butée (20) appartenant à la biellette (17).

9. Installation selon l'une des revendications 1 à 6, caractérisée en ce que le dernier moyen de maintien supérieur (29) et l'organe de support inférieur (4) associé sont disposés à l'écartement voulu grâce à un vérin (26) agissant sur un bras (19) solidaire d'une biellette (16) qui porte le moyen de maintien supérieur (29) ladite biellette (16) s'articulant alors sur l'extrémité d'une autre biellette (17) fixée au cadre (30).

10. Installation selon l'une des revendications précédentes, caractérisée en ce que l'avant dernier organe de support (4) est associé à un moyen de maintien supérieur (11) dont l'écartement vis-à-vis de lui est déterminé par un vérin (26) agissant sur un bras (19) solidaire d'une biellette (16) qui porte le moyen de maintien supérieur (11), ladite biellette (16) s'articulant alors sur l'extrémité d'une autre biellette (17) fixée au châssis (2).

11. Installation selon l'une des revendications précédentes, caractérisée en ce que le transporteur E est monté sur vérins permettant de le faire pivoter et ainsi d'ajuster sa pente pour rejoindre un convoyeur fixe.

12. Installation selon l'une des revendications précédentes, caractérisée en ce que les organes de support (4) sont des rouleaux droits, lesdits rouleaux droits étant associés, sauf éventuellement ceux du début de l'installation, à des moyens de maintien supérieurs constitués également par des rouleaux droits ou par des rouleaux droits revêtus de bagues.

13. Installation selon l'une des revendications 1 à 11, caractérisée en ce que les organes de support (4) sont des tiges cintrées, lesdites tiges étant associées, sauf éventuellement celles du début de l'installation, à des moyens de maintien supérieurs (11, 29) constitués également de tiges cintrées.

14. Installation selon l'une des revendications 12 ou 13, caractérisée en ce que les moyens de maintien supérieurs (11), rouleaux ou tiges cintrés, autres que l'avant dernier et le dernier (29), sont montés à écartement règlable vis-à-vis des organes de support grâce à un système de vis (21) et d'écrous (22, 23) réglant la position d'un bras (19) solidaire d'une biellette (16) qui porte le moyen de maintien supérieur (11) ladite biellette (16) s'articulant alors sur l'extrémité d'une autre biellette (17) fixée au châssis supérieur (2) de l'installation.

15. Installation selon l'une des revendications 12 à 14, caractérisé en ce que les moyens supérieurs de maintien (11), notamment ceux du début de l'installation quand ils existent, et en particulier le premier, sont montés décalables vers l'amont et/ou vers l'aval.

16. Application de l'installation selon les revendications précédentes au bombage ou au bombage et à la trempe de feuilles de verre ayant sur leur face supérieure des revêtements du type bandes d'émail ou des reliefs.

**Patentansprüche**

1. Anlage zum Wölben, oder Wölben und Vorspannen von Glasscheiben, in welcher die Glasscheiben auf einer Reihe von Stützgliedern (4), wie Rollen oder gewölbten Stangen, geführt werden, welche längs eines nach oben konkav gewölbten Profils angeordnet sind, dadurch gekennzeichnet, dass das letzte Stützglied (4) einem oberen schwenkbaren Halteglied (29) zugeordnet ist und dass das letzte Stützglied (4) das erste Element eines Förderers (E) für die Glasscheiben bildet, welcher eine unterschiedlichere Neigung als die des vorhergehenden gekrümmten Profils zur Wölbung oder zur Wölbung und Vorspannung der Glasscheibe aufweist.

2. Anlage nach Anspruch 1, dadurch gekennzeichnet, dass das schwenkbare obere Halteglied (29) in einem Rahmen (30) angeordnet ist, der um eine Achse verschwenkbar ist, welche mit der Drehachse (28) des letzten Stützgliedes (4) der Glasscheiben zusammenfällt, und dass der Rahmen mit einem Gegengewicht versehen ist, welches bestrebt ist, den Rahmen in eine solche Position zurückzuführen, dass das von ihm getragene Halteglied (29) dem letzten, auf dem gekrümmten Profil angeordneten Stützglied (4) gegenüberliegt.

3. Anlage nach Anspruch 2, dadurch gekennzeichnet, dass das Gegengewicht so gross ist, dass der Schwenkvorgang unter der Wirkung des Gewichtes der zwischen dem letzten Halteglied (29) und dem letzten Stützglied (11) befindlichen Scheiben erfolgt, welche nur durch ihren hinteren Rand gehalten sind.

4. Anlage nach einem der Ansprüche 2 oder 3, dadurch gekennzeichnet, dass der schwenkbare Rahmen (30) in der Aufnahmestellung der Glasscheiben am Ende des gekrümmten Profiles durch ein Rastglied (41) verriegelt ist, welches unter der Wirkung einer Feder (42) in eine Aussparung (40) eingreift.

5. Anlage nach Anspruch 4, dadurch gekennzeichnet, dass zum Entriegeln des Rastgliedes (41) beim Eintreffen einer Glasscheibe ein Schubkolbengetriebe (43) vorgesehen ist, welches auf einen das Rastglied (4) tragenden knieförmigen Arm (44) unter der Steuerung eines Detektors einwirkt, der das Vorhandensein einer Glasscheibe ermittelt und am Ausgang des vorletzten Paares der Halteglieder und Stützglieder angeordnet ist.

6. Anlage nach einem der Ansprüche 1 bis 5, dadurch gekennzeichnet, dass elastische Anschläge (37, 38) zur Begrenzung der Schwenkbewegung in beiden Richtungen vorgesehen sind.

7. Anlage nach einem der vorhergehenden Ansprüche, dadurch gekennzeichnet, dass der Abstand zwischen dem letzten oberen Halteglied (29) und dem zugeordneten unteren Stützglied (4) mit einer Schraube (21) und Muttern (22, 23) einstellbar ist, durch welche die Stellung eines Armes (19) regulierbar ist, der mit einem das obere Halteglied (29) tragenden Schwingarm verbunden ist, welcher am Ende eines weiteren, am Rahmen (30) befestigten Schwingarmes (17) angelenkt ist.

8. Anlage nach Anspruch 7, dadurch gekennzeichnet, dass zwischen den beiden Muttern (22 und 23) ein Spiel vorhanden ist und dass eine Feder (24) das Ende des Armes (19) mit einem Anschlag (20) am Schwingarm (17) verbindet.

9. Anlage nach einem der Ansprüche 1 bis 6, dadurch gekennzeichnet, dass der Abstand zwischen dem letzten oberen Halteglied (29) und dem zugeordneten unteren Stützglied (4) durch ein Schubkolbengetriebe (26) veränderbar ist, der auf einen Arm (19) einwirkt, welcher mit einem das obere Halteglied (29) tragenden Schwingarm (16) verbunden ist, der am Ende eines weiteren, am Rahmen (30) befestigten Schwingarms (17) angelenkt ist.

10. Anlage nach einem der vorhergehenden Ansprüche, dadurch gekennzeichnet, dass das vorletzte Stützglied (4) einem oberen Halteglied (11) zugeordnet ist, dessen Abstand zu diesem durch ein Schubkolbengetriebe (26) bestimmbar ist, welches auf einen Arm (19) einwirkt, der mit einem das obere Halteglied (11) tragenden Schwingarm (16) verbunden ist, welcher an einem Ende eines weiteren, am Rahmen (2) befestigten Schwingarms (17) angelenkt ist.

11. Anlage nach einem der vorhergehenden Ansprüche, dadurch gekennzeichnet, dass der Förderer E auf Schubkolbengetrieben angeordnet ist, durch welche der Förderer verschwenkbar und in seiner Neigung zum Anschliessen an einen festen Förderer einstellbar ist.

12. Anlage nach einem der vorhergehenden Ansprüche, dadurch gekennzeichnet, dass die Stützglieder (4) von geradlinigen Rollen gebildet sind, die bis auf gegebenenfalls die am Anfang der Anlage den oberen Haltegliedern zugeordnet sind, welche gleichfalls durch geradlinige Rollen oder durch mit Ringen ummantelte geradlinige Rollen gebildet sind.

13. Anlage nach einem der Ansprüche 1 bis 11, dadurch gekennzeichnet, dass die Stützglieder (4) durch gebogene Stangen gebildet sind, die bis gegebenenfalls auf die am Anfang der Anlage oberen Stützgliedern (11, 29) zugeordnet sind, welche gleichfalls aus gebogenen Stangen gebildet sind.

14. Anlage nach einem der Ansprüche 12 oder 13, dadurch gekennzeichnet, dass die anderen Halteglieder (11), Rollen oder gewölbten Stangen, als die vorletzten oder letzten (29) in einem Abstand zu den Stützgliedern angeordnet sind, der durch eine Schraube (21) und Muttern (22, 23) einstellbar ist, durch die die Stellung eines Armes (19) regulierbar ist, der mit einem das obere Halteglied (11) tragenden Schwingarm (16) verbunden ist, der am Ende eines weiteren, am oberen Rahmen (2) der Anlage befestigten Schwingarms (17) angelenkt ist.

15. Anlage nach einem der Ansprüche 12 bis 14, dadurch gekennzeichnet, dass die oberen Halteglieder (11), insbesondere die am Anfang der Anlage, und zwar insbesondere das erste Stützglied in Richtung der Glasscheibenförderung nach vorne oder nach hinten verschiebbar angeordnet sind.

16. Anwendung einer Anlage nach einem der vorhergehenden Ansprüche zum Wölben oder zum Wölben und Vorspannen von Glasscheiben, die auf ihrer Oberfläche Überzüge in Art von Emailbändern oder Erhebungen aufweisen.

**Claims**

1. Apparatus for curving, or curving and tempering glass sheets in which the glass move on a series of support members (4) such as rollers or curved rods arranged along a curved section having upwardly directed concavity, characterised in that the last support member (4) is associated with a tiltable upper holding means (29) and in that said last support member (4) forms the first element of a transporter (E) for the glass sheets, having a gradient different from that of the curved section for curving or curving and tempering which precedes it.

2. Apparatus according to claim 1, characterised in that the tiltable upper holding means (29) is mounted in a frame (30) which tilts about an axis coincident with the axis of rotation (28) of the last support member (4) for the glass sheets, said frame being provided with a counterweight causing return to a position such that the holding means (29) which is carries faces the last support member (4) arranged on the curved section.

3. Apparatus according to claim 2, characterised in that the value of the counterweight is predetermined so that tilting takes place under the effect of the weight of panes engaged between the last holding means (29) and the last support member (11), held only by their rear end.

4. Apparatus according to claim 2 or 3, characterised in that the tiltable frame (30) is blocked in a position for receiving glass sheets at the end of the curved section by a pin (41) engaged in a notch (40) under the effect of a spring (42).

5. Apparatus according to claim 4, characterised in that a jack (43) acting on an elbow arm (44) carrying the pin (41) in response to a detector for the presence of a glass sheet arranged at the outlet of the last-but-one pair of holding means and support members is provided to disengage said pin (41) on arrival of a glass sheet.

6. Apparatus according to one of claims 1 to 5, characterised in that elastic abutments (37, 38) limiting tilting in both directions are provided.

7. Apparatus according to any preceding claim, characterised in that the last upper holding means (29) and associated lower support member (4) are arranged at the desired separation by means of a system of a screw (21) and nuts (22, 23) regulating the position of an arm (19) connected to a crank rod (16) which carries the upper holding means (29), said crank rod (16) being articulated on the end of another crank rod (17) fixed to the frame (30).

8. Apparatus according to claim 7, characterised in that a play is allowed between the two nuts (22 and 23) and a spring (24) connects the end of the arm (19) to an abutment (20) of the crank rod (17).

9. Apparatus according to one of claims 1 to 6, characterised in that the last upper holding means (29) and the associated lower support member (4) are arranged at a desired separation by means of a jack (26) acting on an arm (19) connected to a crank rod (16) which carries the upper holding means (29), said crank rod (16) being articulated at the end of another crank rod (17) fixed to the frame (30).

10. Apparatus according to any one of the preceding claims, characterised in that the last-but-one support member (4) is associated with an upper holding means (11) of which the separation from it is determined by a jack (26) acting on an arm (19) connected to a crank rod (16) which carries the upper holding means (11), said crank rod (16) being articulated to the end of another crank rod (17) fixed to a chassis (2).

11. Apparatus according to any one of the preceding claims, characterised in that the transporter E is mounted on jacks allowing pivoting and hence adjustment of its gradient to join up to a fixed conveyor.

12. Apparatus according to any one of the preceding claims, characterised in that the support members (4) are straight rollers, said straight rollers being associated, except possibly those at the start of the apparatus, with upper holding means also comprising straight rollers or straight rollers provided with rings.

13. Apparatus according to one of claims 1 to 11, characterised in that the support members (4) are curved rods, said rods being associated, except possibly those at the start of the apparatus, with upper holding means (11, 29) also comprising curved rods.

14. Apparatus according to claim 12 or 13, characterised in that the upper holding means (11), rollers or curved rods, apart from the last-but-one and the last, are mounted at a distance from the support members by a system of screw (21) and nuts (22, 23) controlling the position of an arm (19) connected to a crank rod (16) which carries the upper holding means (11), said crank rod (16) being articulated to the end of another crank rod (17) fixed to an upper chassis (2) of the apparatus.

15. Apparatus according to any one of claims 12 to 14, characterised in that the upper holding means (11), notably those at the start of the apparatus when they exist, and the first in particular, are mounted to be displaceable upwards and downwards.

16. Application of apparatus according to any one of the preceding claims to curving or curving and tempering of glass sheets having coatings of the enamel strip type or reliefs on their upper surface.

FIG_1

FIG_2